# EUROPÄISCHE PATENTSCHRIFT

(11) **EP 2 933 153 B1**
(45) Veröffentlichungstag und Bekanntmachung des Hinweises auf die Patenterteilung: **02.11.2016**
(21) Anmeldenummer: 14165026.7
(22) Anmeldetag: 16.04.2014
(51) Int. Cl.: B60R 22/34, B60R 22/195, B60R 22/357, B60R 22/20, B60R 21/00, A63G 7/00

(54) **Rückhaltesystem zum Einsatz in einem Fahrzeug**
Restraint system for use in a vehicle
Système de retenue destiné à être utilisé dans un véhicule

(43) Veröffentlichungstag der Anmeldung: 21.10.2015
(73) Patentinhaber: Beutler, Jörg, 83607 Holzkirchen (DE)
(72) Erfinder: Jörg Beutler, 84607 Holzkirchen (DE); Thomas Günther, 08294 Lößnitz (DE); Christian Schreiter, 09430 Venusberg (DE)
(74) Vertreter: Lermer, Christoph

(56) Entgegenhaltungen:
- WO-A2-2005/042308
- DE-A1- 19 543 393
- US-A1- 2004 251 722
- US-A1- 2008 169 634
- US-B1- 6 220 171

## Beschreibung

### TECHNISCHES GEBIET

Die vorliegende Anmeldung betrifft ein Rückhaltesystem für ein (insbesondere schienengebundenes) Vergnügungsfahrzeug, insbesondere ein Achterbahnfahrzeug, umfassend: einen Sitz; ein Gurtsystem mit einem Gurt und einem Gurteinstellmechanismus; und ein Gurtschloss; wobei der Gurteinstellmechanismus an einer ersten Seite des Sitzes angeordnet ist, und das Gurtschloss an einer zweiten Seite des Sitzes angeordnet ist; ein Endbereich des Gurts mit dem Gurteinstellmechanismus verbunden ist; das Gurtsystem ein Verriegelungselement zur Verriegelung mit dem Gurtschloss aufweist; das Rückhaltesystem einen Gurtstraffer aufweist.

### STAND DER TECHNIK

Fahrgeschäfte zu Vergnügungszwecken sind in unterschiedlichen Ausführungen bekannt. Neben der Attraktivität und dem Fahrspaß für den Fahrgast stehen bei der Konzeption von Fahrgeschäften auch sicherheitstechnische Aspekte, wie der Einsatz eines geeigneten Rückhaltesystems, im Vordergrund.

Herkömmliche Gurtsysteme sind bekannt in Form starrer Bügel oder in Form von Gurtsystemen, wie sie u.a. auch in verkehrsüblichen Fahrzeugen, wie Automobilen oder Flugzeugen, eingesetzt werden. Ein Beispiel für ein in Achterbahnen gebräuchliches System zeigt die DE 10239891A1.

In der US 6 220 171 B1 sind Fahrzeuge, mit Rückhaltesysteme gemäß den Oberbegriff des Anspruchs 1, für ein Fahrgeschäft in Form einer Achterbahn beschrieben.

Die DE 195 43 393 A1 beschreibt eine Sicherheitsgurt-Halteeinrichtung für ein Fahrzeug.

Die US 2008/169634 A1 beschreibt ein Gurtstraffersystem für den automobilen Bereich.

Aus der US 2004/251722 A1 ist ein Kinderrückhaltesystem mit einer Aufrollvorrichtung bekannt, welches an einem Kindersitz angebracht ist.

Allerdings sind herkömmliche Systeme häufig nicht besonders gut für den Einsatz in Vergnügungsfahrzeugen geeignet, da sich die Insassen relativ schnell, für kurze Zeit, und mit relativ geringer Aufmerksamkeit anschnallen. Ein individuelles Anlegen und Einstellen der Straffheit eines Gurts durch den Fahrgast ist daher oft unzureichend. Außerdem besteht die Gefahr, dass der Fahrgast den Gurt zu locker anlegt und damit während der Fahrt gefährdet ist. Im Extremfall wird der Gurt nicht vollständig geschlossen oder löst sich während der Fahrt. Bei voll automatischen Rückhaltesystemen, die nur bis zu einem bestimmten Widerstand schließen, kann es dagegen vorkommen, dass ein Fahrgast während des Anschnallens nicht korrekt gerade sitzt und deshalb die Rückhaltevorrichtung (z.B. Bügel) zu locker angelegt wird. Andere Systeme, die unabhängig vom Fahrgast bis zu einer bestimmten Position schließen (wie z.B. Bügel in herkömmlichen Sesselliften), tragen der unterschiedlichen Statur der Fahrgäste nicht Rechnung.

### AUFGABE DER ERFINDUNG

Ausgehend davon besteht die Aufgabe der vorliegenden Erfindung darin, ein Rückhaltesystem für ein Vergnügungsfahrzeug bereitzustellen, das ein zuverlässiges Anlegen und eine zuverlässige Absicherung der Fahrzeuginsassen gewährleistet.

### TECHNISCHE LÖSUNG

Diese Aufgabe wird gelöst durch ein Rückhaltesystem für ein Vergnügungsfahrzeug nach Anspruch 1. Vorteilhafte Merkmale und bevorzugte Ausführungsformen ergeben sich aus den abhängigen Ansprüchen.

Ein erfindungsgemäßes Rückhaltesystem für ein (insbesondere schienengebundenes) Vergnügungsfahrzeug, insbesondere ein Achterbahnfahrzeug, umfasst: einen Sitz; ein Gurtsystem mit wenigstens einem Gurt und wenigstens einem Gurteinstellmechanismus; und wenigstens ein Gurtschloss; wobei der Gurteinstellmechanismus an einer ersten Seite des Sitzes angeordnet ist, und das Gurtschloss an einer zweiten Seite des Sitzes angeordnet ist; ein Endbereich des Gurts mit dem Gurteinstellmechanismus verbunden ist; das Gurtsystem ein Verriegelungselement zur Verriegelung mit dem Gurtschloss aufweist; das Rückhaltesystem einen Gurtstraffer aufweist, der umfasst: ein Kraftübertragungselement; und eine Betätigungsvorrichtung zur Betätigung des Kraftübertragungselements zum Straffen des Kraftübertragungselements und/oder des Gurts; wobei die Betätigungsvorrichtung durch einen Operator betätigbar bzw. auslösbar ist.

Anders als bei am täglichen Verkehr üblicherweise teilnehmenden Fahrzeugen soll es beim erfindungsgemäßen Vergnügungsfahrzeug nicht alleine dem Benutzer überlassen bleiben, ob und in welcher Weise er ein Sicherheitssystem einsetzt, da auch dem Betreiber eine (Teil-)Verantwortung hinsichtlich der Sicherheit der Fahrgäste zukommt. Das Personen-Rückhaltesystem ermöglicht es daher, dass der Fahrgast das Rückhaltesystem anlegt. Zusätzlich kann jedoch der Betreiber/Operator, ohne Einfluss des Fahrgasts, Einstellungen des Rückhaltesystems, beispielsweise die Spannung des Gurts, vornehmen und diese Einstellungen für die Dauer der Benutzung festlegen. So können Komponenten des Systems verriegelt oder abgesperrt werden, sodass sie während der Fahrt vom Benutzer nicht geöffnet bzw. deaktiviert werden können. Am Ende der Benutzung kann der Betreiber die Komponenten entriegeln bzw. das Sicherheitssystem deaktivieren. Der Gurtstraffer ist als eine vom Gurtschloss und vom Gurtsystem separate Einrichtung ausgebildet. D.h. die Bedienung des Gurtstraffers findet an anderer Stelle durch (manuelle) Betätigung und ggf. nicht zugänglich durch den Benutzer statt. Das Bedienen des Gurtstraffes hat u.a. den Vorteil, dass durch den bis zum Anschlag nicht vorhandenen Widerstand erkannt werden kann, wenn die Gurtzunge nicht oder nicht bestimmungsgemäß in das Gurtschloss eingeführt wurde.

Der Gurt kann in unterschiedlicher Wiese ausgeführt sein und soll im breiten Sinn so verstanden werden, dass Gurte eines oder mehrere Bänder/Seile, umschäumte Seile, wenigstens ein elastisches Bauteil, z.B. eine biegsame Kunststofflasche, umfassen können. Das Gurtsystem kann in speziellen Ausführungsformen redundant ausgeführt sein.

Vorzugsweise kann das Rückhaltesystem einen Verriegelungsmechanismus aufweisen, der derart ausgebildet ist, dass das Verriegelungselement des Gurtsystems im Gurtschloss koordiniert mit dem Gurteinstellmechanismus verriegelbar und/oder entriegelbar ist. Der Gurteinstellmechanismus ist dann komplett verriegelt und wirkt nicht nur beim ruckartigen Herausziehen des Gurts wie in verkehrsüblichen Fahrzeugen.

Das Rückhaltesystem kann insbesondere einen Verriegelungsmechanismus aufweisen, der beidseitig auf das Verriegelungselement des Gurtsystems bzw. das Gurtschloss und den Gurteinstellmechanismus wirkt.
Dies bedeutet, dass die Verriegelung auf der ersten Seite des Sitzes - zwischen Gurtzunge und Gurtschloss - gleichzeitig oder zeitlich geringfügig versetzt, aber koordiniert mit der Verriegelung auf der zweiten Seite - also Verriegelung des Gurteinstellmechanismus - erfolgt. Die Verriegelung kann extern ausgelöst werden oder auch durch die Verriegelung beispielsweise der Gurtzunge im Gurtschloss ausgelöst werden. Die beidseitige Verriegelung kann auch durch eine Betätigung des Operators, beispielsweise durch die Betätigung der Nachspannvorrichtung, ausgelöst werden. Gleiches gilt für die Entriegelung.

Das Rückhaltesystem kann derart ausgebildet sein, dass der Gurteinstellmechanismus blockiert wird bzw. ist, wenn das Gurtschloss verriegelt wird, und/oder der Gurteinstellmechanismus entriegelt wird bzw. ist, wenn das Gurtschloss geöffnet wird.

Das Gurtschloss weist insbesondere ein Gehäuse und eine Aufnahme auf, die geführt bewegbar im Gehäuse angeordnet sein kann. Die Aufnahme kann beispielsweise geradlinig in einer Führung des Gehäuses bewegbar sein. Je nach relativer Position der Aufnahme im Gehäuse kann ein Loslösen der Gurtzunge von der Aufnahme ermöglicht bzw. blockiert werden. Es wäre jedoch im Rahmen der Erfindung auch möglich, das Straffen des Gurts auf der anderen Seite durchzuführen, z.B. durch weiteres Aufwickeln des Gurts im Gurteinstellmechanismus oder durch ein Heranziehen des Gurteinstellmechanismus in eine Richtung, in der der Gurt weiter gestrafft wird.

Die Aufnahme ist insbesondere mit dem Kraftübertragungselement verbunden. Dieses zieht somit in der speziellen Ausführungsform mit beweglicher Aufnahme diese mehr oder weniger tief in das Gehäuse, wenn der Spannvorgang durch die Spannvorrichtung stattfindet.

Vorzugsweise weist der der Gurtstraffer eine Rücklaufsperre zum Sperren wenigstens einer Bewegungsrichtung des Kraftübertragungselements auf. Die Arretierung kann alternativ so ausgebildet sein, dass direkt das Gurtschloss in eine entsprechende Sperre einrasten kann (oder bei Gurtspannung über ein Einrasten des Gurteinstellmechanismus), während das Kraftübertragungselement dann ungesichert bleiben kann.

Die Rücklaufsperre kann ein Positionselement umfassen, das mit dem Kraftübertragungselement verbunden ist, und ein Sperrelement, beispielsweise eine Sperrklinke, zum Eingriff mit dem Positionselement. Das Positionselement ist geführt beweglich in einem Gehäuse der Rücklaufsperre angeordnet. Es weist beispielsweise ein Zahnprofil bzw. Sägezahnprofil auf, sodass beim Eingriff einer am Gehäuse angeordneten Sperrklinge lediglich eine Bewegung in Spannrichtung möglich ist. Die Sperrklinke kann entriegelbar sein, um den Gurt zu entspannen. Sie kann, wie aus dem Stand der Technik bekannt, in einer Richtung blockieren, in der anderen, beispielsweise durch eine gegen eine Federkraft ausgeübte Kraft, eine Bewegung des Positionselements ermöglichen.

Insbesondere kann die Rücklaufsperre zum Entspannen des Gurts entriegelbar sein. Die Ver- bzw. Entriegelung der Rücklaufsperre kann mit dem Ver-/Entriegelungsmechanismus des Gurtaufrollers und/oder des Gurtschlosses gekoppelt sein, sodass Ver-/Entriegelungsvorgänge koordiniert bzw. in zeitlicher/kausaler Abhängigkeit voneinander ermöglicht bzw. ausgelöst werden. Die Kopplung kann mechanisch, elektrisch, über eine Signalleitung oder eine sonstige Signalverbindung ausgebildet sein.

Der Gurtstraffer umfasst vorzugsweise einen Bowdenzug. Er ist Teil des Kraftübertragungselements. Ein Kabel des Bowdenzugs bewegt bei Betätigung der Betätigungsvorrichtung das Positionierelement, dieses wiederum zieht die Aufnahme in das Gehäuse des Gurtschlosses. Das Kraftübertragungselement kann jedoch auch wenigstens ein Seil, eine Kette, ein Gestänge, ein Kabel, o.ä. umfassen. Im Einzelnen kann das Straffen des Gurts jedoch auch anders durchgeführt werden, beispielsweise wie oben beschrieben. Der Gurtstraffer kann außerdem vorzugsweise eine Kurbel und/oder einen Motor, ggf. mit Zahnrad und/oder Riemen umfassen, mit deren Hilfe der Straffungsvorgang durchgeführt bzw. auf den Gurt übertragen wird.

Die Betätigungsvorrichtung kann zum manuellen Nachspannen des Gurts bzw. einem manuellen Auslösen des Straffungsvorgangs ausgebildet sein, beispielsweise als Hebel, Pedal oder Zugseil. Allerdings ist im Rahmen der Erfindung auch ein nur manuell ausgelöstes Straffen z.B. per Knopfdruck mittels Elektromotor möglich. Der Vorgang der Sicherung eines Benutzers des Fahrzeugs umfasst verschiedene Vorgänge, die nacheinander, gleichzeitig und/oder abhängig bzw. koordiniert zugleich oder nacheinander durchgeführt bzw. ausgelöst werden. Diese Vorgänge sind das Befestigen und die Verriegelung der Gurtzunge an der Aufnahme des Gurtschloss, das Verriegeln der Gurtzunge am Gurtschloss, das Verriegeln des Gurtaufrollers, und das Gurtstraffen mittels des Gurtstraffers. Diese Vorgänge können sich gegenseitig auslösen, z.B. mechanisch, oder ein erster Vorgang kann manuell ausgelöst werden und löst damit automatisch die folgenden Vorgänge aus. Das Gurtschloss4 kann nur durch einen nicht vom Passagier zu erreichenden Entriegelungsmechanismus wieder geöffnet werden.

Der Gurtstraffer kann im Wesentlichen an einer der Sitzfläche des Sitzes abgewandten Seite angeordnet sein, also an der Hinter- und/oder Unterseite des Sitzes. Der Gurtstraffer bzw. die Rücklaufsperre kann insbesondere an der Rückseite der Lehne des Sitzes angeordnet sein.

Der Gurteinstellmechanismus ist insbesondere als Gurtaufroller ausgebildet. Er kann jedoch auch auf andere Weise ausgebildet sein, um die Gurtlänge voreinzustellen, sobald der Gurt geschlossen wird. Bei dieser ersten Einstellung wird die den Passagier umfassenden Gurtlänge eingestellt, z.B. durch den Aufroller, der z.B. über Federkraft oder auch motorisch den Gurt aufrollt, oder ein elastisches Element wie Gummiband, Zugfeder, das auch linear wirken kann, oder ein Linearmotor. Nach der ersten Einstellung kann dann der Gurt im Gurteinstellmechanismus arretiert werden.

Es wäre denkbar, dass Gurteinstellmechanismus und Gurtschloss kombiniert ausgebildet sind. Zunächst nimmt der Passagier durch Einführen und Arretieren des Gurtes in das Gurtschloss die erste Längeneinstellung vor. Er kann beispielsweise den Gurt komplett aus einer auf der dem Gurtschloss abgewandten Seite angeordneten Gurtaufnehmer herausziehen und auf Gurtschlossseite dann z.B. ratschenartig die Gurtzunge soweit in das Gurtschloss einführen, bis der Gurt stramm sitzt (erste Einstellung). Das Nachspannen als zweite Einstellung erfolgt durch den Operator wie oben beschrieben. Alternativ dazu könnte die Vorrichtung auch so ausgebildet sein, dass der Operator direkt an der Ratsche den Gurt weiter ins Gurtschloss hineinzieht. Das Kraftübertragungselement mit Betätigungsvorrichtung, z.B. das als Griff ausgebildete Gurtende, wäre dabei direkt in den Gurt integriert.

Für alle genannten Merkmale soll sowohl einzeln als auch in Kombinationen miteinander Schutz beansprucht werden.

### KURZE BESCHREIBUNG DER FIGUREN

Weitere Vorteile und Merkmale der Erfindung werden aus der Beschreibung bevorzugter Ausführungsbeispiele anhand der Figuren deutlich. Es zeigen:
- Figur 1: eine Draufsicht auf ein Rückhaltesystem gemäß der Erfindung;
- Figur 2a, 2b: Detaildarstellungen einer ersten Komponente der Erfindung; und
- Figur 3: eine Detaildarstellung einer zweiten Komponente der Erfindung.

### DETAILLIERTE BESCHREIBUNG EINES BEVORZUGTEN AUSFÜHRUNGSBEISPIELS

Das nachfolgend beschriebene Ausführungsbeispiel bezieht sich auf ein Rückhaltesystem zum Einsatz in einem Vergnügungsfahrzeug, beispielsweise in einem Achterbahnfahrzeug.

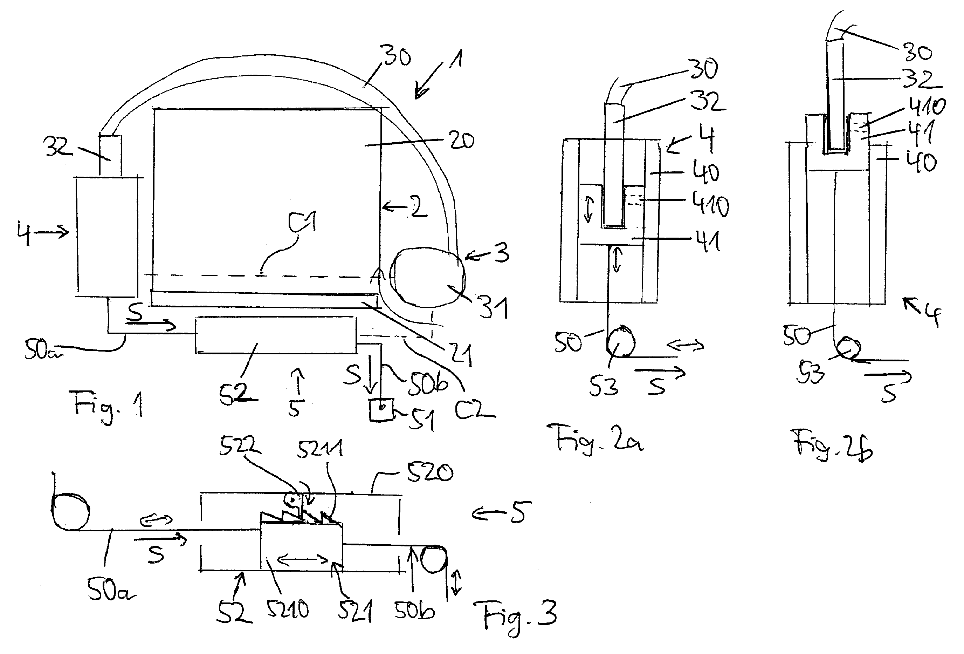

Wie in der Figur 1 dargestellt weist das erfindungsgemäße Rückhaltesystem 1 für ein Vergnügungsfahrzeug einen Sitz 2 für einen Benutzer mit einer Sitzfläche 20 und einer Lehne 21 auf. Ein Gurtsystem 3 weist einen Gurt 30 (z.B. Hüftgurt), einen Gurtaufroller 31 und eine Schlosszunge 32 zum Einschub und zur Verriegelung in einem Gurtschloss 4 auf.

Das Gurtschloss 4 ist am Sitz 2, zum Beispiel an der Unterkonstruktion des Sitzes 2, oder an einem anderen Fahrzeugteil an einer ersten Seite des Sitzes 2 fixiert. Der Gurtaufroller 31 ist an einer zweiten (der ersten Seite gegenüberliegenden) Seite des Sitzes 2 am Sitz 2 oder am Fahrzeug befestigt.

Außerdem ist ein Verriegelungsmechanismus vorgesehen, der so ausgebildet ist, dass das Gurtschloss 4 und der Gurtaufroller 31 gleichzeitig und beidseitig verriegelt werden können. Der Gurtaufroller 31 wird dabei mit dem Einstecken der Gurtzunge 32 in das Gurtschloss 4 blockiert. Der Gurt 30 ist damit fixiert und wird erst beim Einfahren in den Bahnhof über eine Kulissensteuerung oder dergleichen wieder entriegelt, so dass die Gurtzunge 32 aus dem Gurtschloss 4 genommen werden kann und der Gurtaufroller 31 den losgelösten Gurt 30 einrollt.

Der im Gurtschloss 4 blockierte Gurt 30 kann über einen speziellen Mechanismus 5 (Gurtstraffer bzw. Nachspannmechanismus) vom Bediener/Operator nachgespannt werden, z.B. wenn der Fahrgast beim Gurtanlegen nicht in gerader Position saß und der Gurt 30 deswegen zu locker gespannt war. Der Gurtstraffer 5 weist ein Kraftübertragungselement 50 auf, beispielsweise eine Kette, ein Kabel, ein Seil, ein Gestänge, o.ä., das eine Spannkraft auf die Gurtzunge 32 und damit auf den Gurt 30 überträgt. Das Kraftübertragungselement 50 kann aus mehreren Teilelementen 50a, 50b bestehen, zwischen denen andere Komponenten angeordnet bzw. die mit anderen Komponenten verbunden sind. Das Kraftübertragungselement 50 bzw. wenigstens Teilelemente/Teilabschnitte 50a, 50b des Kraftübertragungselements 50 können als Bowdenzug ausgebildet sein.

Das Kraftübertragungselement 50 wird betätigt über ein Betätigungselement 51, das vom Betreiber beispielsweise händisch bedient werden kann, um den Gurtstraffvorgang durchzuführen. Das Betätigungselement 51 kann beispielsweise ein Hebel sein, der umgelegt wird, um eine Spannkraft zu erzeugen.

Der Gurtstraffer 5 weist darüber hinaus eine Rücklaufsperre 52 auf, die verhindert, dass das gespannte Kraftübertragungselement 50 entgegen der Spannrichtung S entspannen und somit der Gurt 30 gelockert werden kann. Die Rücklaufsperre 52 kann nur vom Betreiber entriegelt werden, beispielsweise wenn die Fahrt beendet ist, oder aber automatisch, z.B. über eine Kulissensteuerung mit einer an der Bahn (insbesondere im Bahnhofbereich) angebrachten Kulisse.

Die Verbindungen C1 bzw. C2, die mechanisch, elektronisch, oder auch reine Signalübertragungswege sein können, sorgen dafür, dass der Gurtaufroller 31 und das Gurtschloss 4 koordiniert verriegelt bzw. entriegelt werden können. Eine koordinierte Ver- bzw. Entriegelung kann auch durch eine vergleichbare Verbindung C2 zwischen dem Gurtaufroller 31 und dem Gurtstraffer 5 realisiert werden, wobei bei dieser Ausführung der Zustand des Gurtstraffers 5 den Zustand (Ver- oder Entriegelung) des Gurtaufrollers 31 bestimmt.

In einem Beispiel wird durch Ziehen eine Positionierelements 521 (vgl. Figur 3) ein Entriegelungsblech (nicht dargestellt) bewegt, das über einen Mechanismus C2 eine Klinke (nicht dargestellt) freischaltet, die den Gurtaufroller 31 blockiert. Alternativ könnte auch bereits das Eindrücken der Gurtzunge 32 in das Gurtschloss 4 durch den Fahrgast diesen Mechanismus (vgl. C1) auslösen.

Die Figur 2a zeigt das Gurtschloss 4 mit eingesteckter Gurtzunge 32 in einem ersten gespannten und verriegelten Zustand, die Figur 2b zeigt das Gurtschloss 4 mit eingesteckter Gurtzunge 32 in einem zweiten entspannten und entriegelten Zustand.

Das Gurtschloss 4 umfasst ein Gehäuse 40, das ortsfest am Sitz bzw. am Fahrzeug befestigt ist. Im Gehäuse 40 ist eine bewegliche Aufnahme 41 zur Aufnahme der Gurtzunge 32 angeordnet. Die Aufnahme 41 ist in einer Führung wenigstens zwischen einer ersten Position (maximal gespannter Zustand) und einer zweiten Position (maximal entspannter Zustand) geführt bewegbar. Diese Bewegbarkeit ist durch Doppelpfeile angedeutet. Für die Begrenzung der Bewegung können entsprechende Anschläge vorgesehen sein. Die Aufnahme 41 ist mit einem Ende des Kraftübertragungselements 50 verbunden. Dieses verläuft über ein Umlenkelement 53 in die Rücklaufsperre 52 (vgl. Figur 1).

In der Figur 2a ist die Aufnahme 41 in Spannrichtung S in das Gehäuse 40 gezogen. Der Gurt 30 ist dadurch gespannt. In der Figur 2b ist die Aufnahme 41 entgegen der R Spannrichtung S zum distalen Ende des Gehäuses 40 bewegt. Der Gurt 30 ist dadurch entspannt.

Die Aufnahme 41 weist eine Verriegelung 410 auf, die ab einer bestimmten Position der Aufnahme im Gehäuse 40 die Gurtzunge 32 verriegelt und vom Benutzer nicht betätigbar ist, während die Verriegelung 410 in einer zweiten Position vom Benutzer zum Entriegeln betätigbar ist. Im Betrieb drückt der Fahrgast die Gurtzunge 32 mit der Aufnahme 41 nach unten in das Gehäuse 40 in eine Mindestverriegelungsposition, so dass die Gurtzunge 32 nicht mehr abgenommen werden kann. Anschließend erfolgt ein Nachspannen mittels des Gurtspanners 5.

In der Figur 3 ist der Gurtspanner 5 detaillierter dargestellt. Der Gurtspanner 5 weist das Kraftübertragungselement 50 (z.B. Kette, Seil, o.ä.) und die Rücklaufsperre 52 auf. Die Rücklaufsperre 52 umfasst ein Gehäuse 520 und ein im Gehäuse 520 angeordnetes, beweglich geführtes Positionselement 521, das beispielsweise als Fräsklotz ausgebildet ist. Das Positionselement 521 ist mit dem Kraftübertragungselement 50 so verbunden, dass die vom Betätigungselement 51 (vgl. Figur 1) ausgeübte Kraft über das Positionselement 521 auf die Aufnahme 41 übertragen wird. Das Positionselement 521 weist einen Grundkörper 5210 und eine Verzahnung, z.B. ein Sägezahnprofil 5211, auf, das so ausgebildet ist, dass ein Verriegelungselement 522, z.B. eine Sperrklinke, das Positionselement 521 so verriegelt, dass dieses lediglich in Spannrichtung S, jedoch nicht entgegen der Spannrichtung S, bewegbar ist. Der Fräsklotz 521 sitzt beweglich in einer Führung des Gehäuses 50 und wird vom Operator über das Kraftübertragungselement in die Nachspannposition weggezogen, bis der Gurt 30 straff ist. Eine Bewegung entgegen der Spannrichtung S ist erst im Entspannungsvorgang möglich, wenn der Betreiber das Verriegelungselement 522 entsperrt hat bzw. dieses automatisch entriegelt wurde, um den Gurt 30 zu entspannen.

## Patentansprüche

1. Rückhaltesystem (1) zum Einsatz in einem Fahrzeug, insbesondere in einem Vergnügungsfahrzeug, umfassend:
einen Sitz (2); ein Gurtsystem (3) mit wenigstens einem Gurt (30) und wenigstens einem Gurteinstellmechanismus (31); und wenigstens ein Gurtschloss (4);
wobei der Gurteinstellmechanismus (31) an einer ersten Seite des Sitzes (2) angeordnet ist,
und das Gurtschloss (4) an einer zweiten Seite des Sitzes (2) angeordnet ist;
ein Endbereich des Gurts (30) mit dem Gurteinstellmechanismus (31) verbunden ist; und
das Gurtsystem (3) ein Verriegelungselement (32) zur Verriegelung mit dem Gurtschloss (4) aufweist;
**dadurch gekennzeichnet, dass**
der Gurteinstellmechanismus (31) der Voreinstellung der Gurtlänge durch den Benutzer dient und verriegelbar ist; und wobei
das Rückhaltesystem (1) einen Gurtstraffer (5) aufweist, der umfasst: ein Kraftübertragungselement (50); und eine Betätigungsvorrichtung (51) zur Betätigung des Kraftübertragungselements (50) zum Straffen des Kraftübertragungselements (50) und/oder des Gurts (30);
wobei die Betätigungsvorrichtung (51) durch einen Operator betätigbar bzw. auslösbar ist.

2. Rückhaltesystem (1) nach Anspruch 1, **dadurch gekennzeichnet, dass** das Rückhaltesystem (1) einen Verriegelungsmechanismus aufweist, der derart ausgebildet ist, dass das Verriegelungselement (32) des Gurtsystems (3) im Gurtschloss (4) koordiniert mit dem Gurteinstellmechanismus (31) verriegelbar und/oder entriegelbar ist.

3. Rückhaltesystem (1) nach Anspruch 1, **dadurch gekennzeichnet, dass** das Rückhaltesystem (1) einen Verriegelungsmechanismus aufweist, der beidseitig auf das Verriegelungselement (32) des Gurtsystems (3) bzw. das Gurtschloss (4) und den Gurteinstellmechanismus (31) wirkt.

4. Rückhaltesystem (1) nach einem der vorhergehenden Ansprüche, **dadurch gekennzeichnet, dass**
das Rückhaltesystem (1) derart ausgebildet ist, dass der Gurteinstellmechanismus (31) blockiert wird bzw. ist, wenn das Gurtschloss (4) verriegelt wird, und/oder der Gurteinstellmechanismus (31) entriegelt wird bzw. ist, wenn das Gurtschloss (4) geöffnet wird.

5. Rückhaltesystem (1) nach einem der vorhergehenden Ansprüche, **dadurch gekennzeichnet, dass**
das Gurtschloss (4) ein Gehäuse (40) und eine Aufnahme (41) aufweist, die geführt bewegbar im Gehäuse (40) angeordnet sein kann.

6. Rückhaltesystem (1) nach Anspruch 5, **dadurch gekennzeichnet, dass** die Aufnahme (41) mit dem Kraftübertragungselement (5) verbunden sein kann.

7. Rückhaltesystem (1) nach einem der vorhergehenden Ansprüche, **dadurch gekennzeichnet, dass**
der Gurtstraffer (5) eine Rücklaufsperre (52) zum Sperren wenigstens einer Bewegungsrichtung des Kraftübertragungselements (50) umfasst.

8. Rückhaltesystem (1) nach Anspruch 7, **dadurch gekennzeichnet, dass**
die Rücklaufsperre (52) ein Positionselement (521) umfasst, das mit dem Kraftübertragungselement verbunden ist, und ein Sperrelement, beispielsweise eine Sperrklinke (522), zum Eingriff mit dem Positionselement (521).

9. Rückhaltesystem (1) nach einem der vorhergehenden Ansprüche 7 oder 8, **dadurch gekennzeichnet, dass**
die Rücklaufsperre (52) zum Entspannen des Gurts (30) entriegelbar ist.

10. Rückhaltesystem (1) nach einem der vorhergehenden Ansprüche 7 bis 9, **dadurch gekennzeichnet, dass**
der Gurtstraffer (5) im Wesentlichen an einer der Sitzfläche (20) des Sitzes (2) abgewandten Seite angeordnet ist, also an der Hinter- und/oder Unterseite des Sitzes (2).

11. Rückhaltesystem (1) nach einem der vorhergehenden Ansprüche, **dadurch gekennzeichnet, dass**
der Gurtstraffer (5) einen Bowdenzug, eine Kette, ein Seil, ein Kabel, und/oder ein Gestänge umfasst.

12. Rückhaltesystem (1) nach einem der vorhergehenden Ansprüche, **dadurch gekennzeichnet, dass**
der Gurtstraffer (5) eine Kurbel und/oder einen Motor, ggf. mit Zahnrad und/oder Riemen umfasst.

13. Rückhaltesystem (1) nach einem der vorhergehenden Ansprüche, **dadurch gekennzeichnet, dass**
die Betätigungsvorrichtung (51) zum manuellen Nachspannen des Gurts (30) ausgebildet ist.

14. Rückhaltesystem (1) nach einem der vorhergehenden Ansprüche, **dadurch gekennzeichnet, dass**
der Gurteinstellmechanismus (31) als Gurtaufroller ausgebildet ist.

## Claims

1. Restraint system (1) for use in a vehicle, especially an amusement vehicle, comprising:
a seat (2); a belt system (3) having at least one belt (30) and at least one belt-adjusting mechanism (31); and at least one buckle (4);
wherein the belt-adjusting mechanism (31) is disposed at a first side of the seat (2) and the buckle (4) is disposed at a second side of the seat (2);
an end portion of the belt (30) is connected to the belt-adjusting mechanism (31); and the belt system (3) has a locking member (32) for locking with the buckle (4);
**characterised by** the fact that
the belt-adjusting mechanism (31) serves for pre-setting the belt length by the user and is lockable; and in which
the restraint system (1) has a belt pretensioner (5), which comprises: a force transmission member (50); and an actuator (51) for actuating the force transmission member (50) for tightening the force transmission member (50) and/or the belt (30);
wherein the actuator (51) can be actuated and/or triggered by an operator.

2. Restraint system (1) in accordance with claim 1, **characterised by** the fact that the restraint system (1) has a locking mechanism which is configured such that the locking member (32) of the belt system (3) in the buckle (4) can be locked and/or unlocked in coordination with the belt-adjusting mechanism (31).

3. Restraint system (1) in accordance with claim 1, **characterised by** the fact that the restraint system (1) has a locking mechanism which acts from both sides on the locking member (32) of the belt system (3) and/or the buckle (4) and the belt-adjusting mechanism (31).

4. Restraint system (1) in accordance with any of the previous claims, **characterised by** the fact that
the restraint system (1) is configured such that the belt-adjusting mechanism (31) becomes or is blocked if the buckle (4) becomes locked, and/or the belt-adjusting mechanism (31) becomes or is unlocked if the buckle (4) is opened.

5. Restraint system (1) in accordance with any of the previous claims, **characterised by** the fact that
the buckle (4) comprises a housing (40) and a receptacle (41), which can be disposed so as to be movably guided in the housing (40).

6. Restraint system (1) in accordance with claim 5, **characterised by** the fact that the receptacle (41) can be connected to the force transmission member (5).

7. Restraint system (1) in accordance with any of the previous claims, **characterised by** the fact that
the pretensioner (5) comprises a backstop (52) for blocking at least one direction of movement of the force transmission member (50).

8. Restraint system (1) in accordance with claim 7, **characterised by** the fact that the backstop (52) comprises a position element (521) which is connected to the force transmission member, and a locking element, such as a pawl (522), for engagement with the position element (521).

9. Restraint system (1) in accordance with any of claims 7 or 8, **characterised by** the fact that
the backstop (52) for relaxing the belt (30) can be unlocked.

10. Restraint system (1) in accordance with any of claims 7 to 9, **characterised by** the fact that
the pretensioner (5) essentially is disposed at a side facing away from a seat area (20) of the seat (2), that is, to the rear and/or beneath the seat (2).

11. Restraint system (1) in accordance with any of the previous claims, **characterised by** the fact that
the pretensioner (5) comprises a bowden cable, a chain, a rope, a cable, and/or a rod.

12. Restraint system (1) in accordance with any of the previous claims, **characterised by** the fact that
the pretensioner (5) comprises a crank and/or a motor, possibly with toothed gear and/or belt.

13. Restraint system (1) in accordance with any of the previous claims, **characterised by** the fact that
the actuator (51) is configured for manual re-tightening of the belt (30).

14. Restraint system (1) in accordance with any of the previous claims, **characterised by** the fact that
the belt-adjusting mechanism (31) is configured as a belt retractor.

## Revendications

1. Système de retenue (1) destiné à être utilisé dans un véhicule, en particulier dans un véhicule de manège comprenant :
un siège (2), un système de ceinture (3) avec au moins une ceinture (30) et au moins un mécanisme de réglage de ceinture (31) et au moins une boucle de ceinture (4),
cependant que le mécanisme de réglage de ceinture (31) est placé sur un premier côté du siège (2) et la boucle de ceinture (4) est placée sur un second côté du siège (2),
qu'une zone d'extrémité de la ceinture (30) est reliée au mécanisme de réglage de ceinture (31) et le système de ceinture (3) présente un élément de verrouillage (32) pour le verrouillage avec la boucle de ceinture (4),
**caractérisé en ce que** le mécanisme de réglage de ceinture (31) sert au réglage préalable de la longueur de la ceinture par l'utilisateur et est verrouillable et
cependant que le système de retenue (1) présente un prétensionneur de ceinture (5) qui comprend : un élément de transmission de force (50) et un dispositif d'actionnement (51) pour l'actionnement de l'élément de transmission de force (50) pour tendre l'élément de transmission de force (50) et/ou la ceinture (30), cependant que le dispositif d'actionnement (51) peut être actionné ou déclenché par un opérateur.

2. Système de retenue (1) selon la revendication 1, **caractérisé en ce que** le système de retenue (1) présente un mécanisme de verrouillage qui est configuré de telle manière que l'élément de verrouillage (32) du système de ceinture (3) peut être verrouillé et/ou déverrouillé dans la boucle de ceinture (4) en étant coordonné avec le mécanisme de réglage de ceinture (31).

3. Système de retenue (1) selon la revendication 1, **caractérisé en ce que** le système de retenue (1) présente un mécanisme de verrouillage qui agit des deux côtés sur l'élément de verrouillage (32) du système de ceinture (3) ou sur la boucle de ceinture (4) et le mécanisme de réglage de ceinture (31).

4. Système de retenue (1) selon l'une des revendications précédentes, **caractérisé en ce que** le système de retenue (1) est configuré de telle manière que le mécanisme de réglage de ceinture (31) se bloque ou est bloqué quand la boucle de ceinture (4) est verrouillée et/ou le mécanisme de réglage de ceinture (31) se déverrouille ou est déverrouillé lorsque la boucle de ceinture (4) est ouverte.

5. Système de retenue (1) selon l'une des revendications précédentes, **caractérisé en ce que** la boucle de ceinture (4) présente un boîtier (40) et un logement (41) qui peut être placé en étant mobile de façon guidée dans le boîtier (40).

6. Système de retenue (1) selon la revendication 5, **caractérisé en ce que** le logement (41) peut être relié à l'élément de transmission de force (5).

7. Système de retenue (1) selon l'une des revendications précédentes, **caractérisé en ce que** le prétensionneur de ceinture (5) comprend un blocage anti-retour (52) pour bloquer au moins une direction de déplacement de l'élément de transmission de force (50).

8. Système de retenue (1) selon la revendication 7, **caractérisé en ce que** le blocage anti-retour (52) comprend un élément de position (521) qui est relié à l'élément de transmission de force et un élément de blocage, par exemple un cliquet (522) pour l'engrènement avec l'élément de position (521).

9. Système de retenue (1) selon l'une des revendications précédentes 7 ou 8, **caractérisé en ce que** le blocage anti-retour (52) peut être déverrouillé pour relâcher la ceinture (30).

10. Système de retenue (1) selon l'une des revendications précédentes 7 à 9, **caractérisé en ce que** le prétensionneur de ceinture (5) est placé substantiellement sur un côté détourné de la surface d'assise (20) du siège (20), donc sur le côté postérieur et/ou inférieur du siège (2).

11. Système de retenue (1) selon l'une des revendications précédentes, **caractérisé en ce que** le prétensionneur de ceinture (5) comprend un câble Bowden, une chaîne, une corde, un câble et/ou une tringlerie.

12. Système de retenue (1) selon l'une des revendications précédentes, **caractérisé en ce que** le prétensionneur de ceinture (5) comprend une manivelle et/ou un moteur, le cas échéant avec une roue dentée et/ou une courroie.

13. Système de retenue (1) selon l'une des revendications précédentes, **caractérisé en ce que** le dispositif d'actionnement (51) est configuré pour le réajustement manuel de la courroie (30).

14. Système de retenue (1) selon l'une des revendications précédentes, **caractérisé en ce que** le mécanisme de réglage de ceinture (31) est configuré comme un enrouleur de ceinture.
